# EUROPEAN PATENT APPLICATION

(11) **EP 4 678 946 A1**
(43) Date of publication of application: **14.01.2026**
(21) Application number: 24770219.4
(22) Date of filing: 25.01.2024
(51) Int. Cl.: F16H 57/04, H02K 7/116

(54) **VEHICLE DRIVE DEVICE**

(30) Priority: 10.03.2023 JP 2023037570
(71) Applicant: AISIN CORPORATION, Kariya-shi, Aichi 448-8650 (JP)
(72) Inventor: MUNETO, Takuya, Kariya-shi, Aichi 448-8650 (JP); YAMASHITA, Teppei, Kariya-shi, Aichi 448-8650 (JP); SUZUKI, Tomoyuki, Kariya-shi, Aichi 448-8650 (JP); TAKEDA, Yusuke, Kariya-shi, Aichi 448-8650 (JP); TOMODA, Yoshihito, Kariya-shi, Aichi 448-8650 (JP)
(74) Representative: TBK
(86) International application number: PCT/JP2024/002167
(87) International publication number: WO 2024/190099

(57) **Abstract**

There is disclosed a vehicle drive device including: a case that forms a housing chamber inside which oil flows; a power transmission mechanism disposed inside the housing chamber, the power transmission mechanism being able to transmit power from a power source, to a wheel; and an oil passage structure at least a portion of which is formed in the case. The power transmission mechanism includes a rotary body that rotates about an axis when power transmission is performed. The rotary body includes an outer peripheral portion able to scoop up oil stored on a lower side inside the housing chamber by rotation of the rotary body. The oil passage structure includes a first oil chamber into which oil scooped up by rotation of the rotary body is introduced, and a first oil passage communicating with the first oil chamber. Oil inside the first oil chamber is pressure-fed to the first oil passage, based on an oil pressure generated when new oil is introduced into the first oil chamber by rotation of the rotary body.

## Description

### TECHNICAL FIELD

The present disclosure relates to a vehicle drive device.

### BACKGROUND ART

There is known a vehicle drive device in which oil scooped up by a gear is introduced into a catch tank, and in which the oil stored in the catch tank is supplied to an axis oil passage of a rotary electric machine.

### CITATION LIST

### PATENT LITERATURE

Patent Literature 1: JP 9-226394 A

### SUMMARY OF INVENTION

### TECHNICAL PROBLEMS

Incidentally, when a case of a vehicle drive device is tilted in accordance with the attitude of a vehicle, an oil passage such as an axis oil passage is also tilted accordingly. In this regard, in such a conventional technique as described above, there may be a case in which the oil inside the catch tank is unable to move up through an oil passage tilted with respect to a horizontal plane in accordance with the attitude of the vehicle. In this case, there arises a problem that desired system performance of the vehicle drive device is not obtainable. On the other hand, when an oil pump is provided, such a problem can be solved. However, there are problems of increases in the number of components and the cost.

Therefore, in one aspect, the present disclosure includes a structure in which oil scooped up by a gear is circulated inside a case, and reduces a possibility that the oil is not suppliable to a desired oil passage due to an attitude of a vehicle.

### SOLUTION TO PROBLEMS

In one aspect, there is provided a vehicle drive device including:
a case that forms a housing chamber inside which oil flows;
a power transmission mechanism disposed inside the housing chamber, the power transmission mechanism being able to transmit power from a power source, to a wheel; and
an oil passage structure at least a portion of which is formed in the case,
in which
the power transmission mechanism includes a rotary body that rotates about an axis when power transmission is performed,
the rotary body includes an outer peripheral portion able to scoop up oil stored on a lower side inside the housing chamber by rotation of the rotary body,
the oil passage structure includes a first oil chamber into which oil scooped up by rotation of the rotary body is introduced, and a first oil passage communicating with the first oil chamber, and
oil inside the first oil chamber is pressure-fed to the first oil passage, based on an oil pressure generated when new oil is introduced into the first oil chamber by rotation of the rotary body.

### ADVANTAGEOUS EFFECTS OF INVENTION

In one aspect, according to the present disclosure, it is possible to include a structure in which oil scooped up by a gear is circulated inside a case, and reduce a possibility that the oil is not suppliable to a desired oil passage due to an attitude of a vehicle.

### BRIEF DESCRIPTION OF DRAWINGS

FIG. 1 is a schematic diagram, in a top view, showing a mounting state of a vehicle drive device in a vehicle.
FIG. 2 is a cross-sectional view of the vehicle drive device.
FIG. 2A is a skeleton diagram showing the vehicle drive device.
FIG. 3 is a top view schematically showing the vehicle drive device.
FIG. 4 is a side view schematically showing the vehicle drive device as viewed from a second side A2 in an axial direction.
FIG. 5 is a side view schematically showing a differential cover member as viewed from an A1 side.
FIG. 6 is a view schematically showing a state in which, in accordance with a tilt in a left-right direction of the vehicle, a tilt in a left-right direction occurs in axis oil passages, and is an enlarged view of Q6 in FIG. 2.
FIG. 7 is a schematic explanatory view of a principle of generating an oil pressure for oil in a pressure-feed oil chamber, and is an enlarged view of Q7 in FIG. 4.
FIG. 8 is an explanatory view of flows of oil via a pressure-feed oil passage, and is a view in which corresponding flows of the oil are schematically represented on FIG. 2 by using respective arrows.
FIG. 9 is a side view schematically showing the vehicle drive device as viewed from the A1 side.
FIG. 10 is a side view schematically showing the vehicle drive device as viewed from a side.
FIG. 11 is a side view schematically showing a motor cover member as viewed from the second side A2 in the axial direction.
FIG. 12 is a side view schematically showing the motor cover member as viewed from the first side A1 in the axial direction.

### DESCRIPTION OF EMBODIMENTS

Hereinafter, embodiments will be described in detail with reference to the accompanying drawings. Note that the dimensional ratios in the drawings are merely examples, and are not limited thereto, and shapes and the like in the drawings may be partially exaggerated for convenience of description.

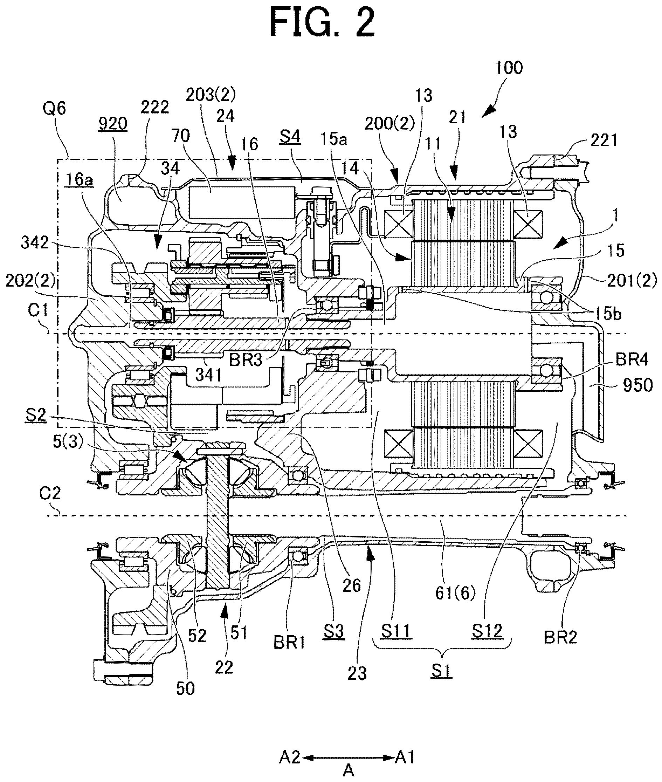

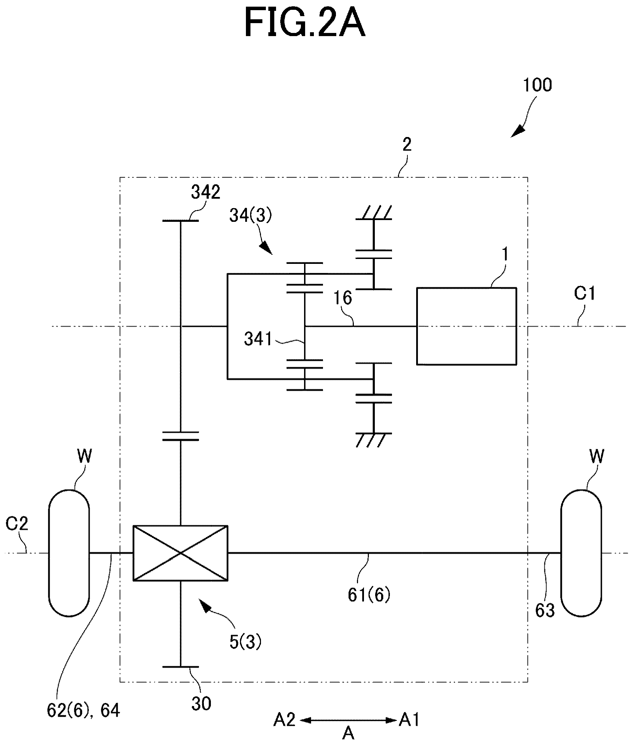

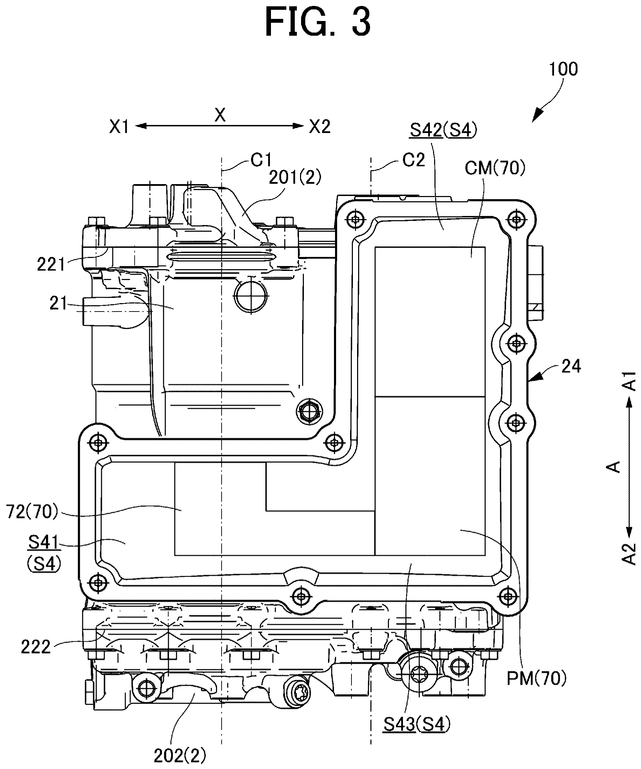

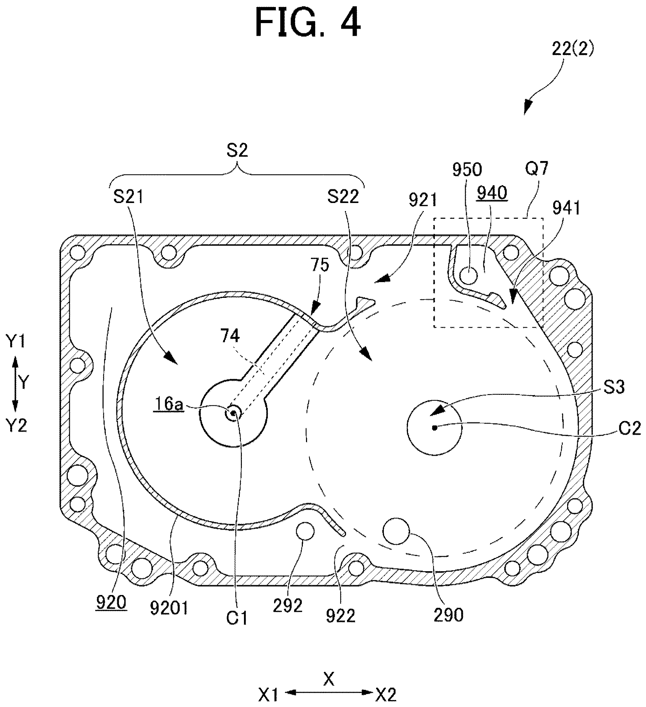

In the following description, the Y-direction (see FIG. 4 and the like) corresponds to an upper-lower direction in a state where a vehicle drive device 100 is used, that is, an upper-lower direction in a case where the vehicle drive device 100 is disposed in an orientation in the state of being used. Each of the Y1 side and the Y2 side corresponds to a corresponding one of an upper side and a lower side along the Y-direction. Note that the upper-lower direction is not necessarily parallel to the vertical direction, and is simply required to have a vertical direction component dominantly. In addition, directions of respective members in the following description represent directions in a state where the respective members are assembled to the vehicle drive device 100. Further, terms related to a dimension, a disposition or arrangement direction, a disposition or arrangement position, and the like for each member are concepts including a state having a difference due to deviation (deviation within a range allowable in manufacturing). The A-direction (see FIG. 2 and the like) corresponds to an axial direction, and in each of FIG. 2 and the like, an A1 side and an A2 side along the A-direction are defined. The A-direction is not necessarily in a horizontal plane, and is simply required to have a component in the horizontal plane dominantly. Further, the X-direction (see FIG. 3 and the like) is a direction orthogonal to both the A-direction and the Y-direction, and in each of FIG. 3 and the like, an X1 side and an X2 side along the X-direction are defined.

The phrase "drivingly coupled" herein refers to a state in which two rotary elements are coupled to be able to transmit drive power (synonymous with torque), and includes a state in which the two rotary elements are coupled to rotate together or a state in which the two rotary elements are coupled to be able to transmit drive power via one, or two or more transmission members. Examples of such a transmission member include various members (for example, a shaft, a gear mechanism, a belt, and a chain) that transmit rotation at the same speed or at a shifted speed. Note that the transmission member may include an engagement device (for example, a friction engagement device or a meshing-type engagement device) that selectively transmits rotation and drive power.

Also, the term "communicate" or "communication" herein refers to a state in which two spatial elements are in fluid communication with each other. That is, this term refers to a state in which a fluid can move between the two spatial elements. In this case, the two spatial elements may communicate with each other directly, or may communicate with each other indirectly (that is, via another spatial element).

The term "rotary electric machine" herein is used as a concept including a motor (electric motor), a generator (electric power generator), and a motor-generator that functions as both the motor and the generator as necessary. In addition, herein, with respect to the disposition or arrangement of two members, the phrase "overlap as viewed in a specific direction" means that when an imaginary straight line parallel to the direction of the view is moved in each direction orthogonal to the imaginary straight line, a region where the imaginary straight line intersects both of the two members exists at least in part. Further, herein, with respect to the disposition or arrangement of two members, the phrase "disposition or arrangement regions in a specific direction overlap" means that at least a part of a disposition or arrangement region in the specific direction of one of the two members is included in a disposition or arrangement region in the specific direction of the other one of the two members.

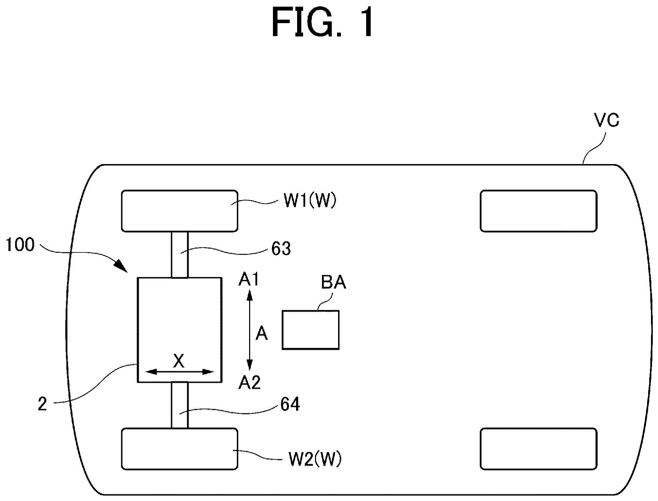

FIG. 1 is a schematic diagram, in a top view, showing a mounting state of the vehicle drive device 100 in a vehicle VC. FIG. 2 is a cross-sectional view of the vehicle drive device 100. FIG. 2A is a skeleton diagram showing the vehicle drive device 100.

As schematically shown in FIG. 2A, the vehicle drive device 100 includes a rotary electric machine 1, a pair of output members 6 each drivingly coupled to a corresponding one of a pair of wheels W (see FIG. 1), and a transmission mechanism 3 that transmits drive power between the rotary electric machine 1 and the pair of output members 6. The vehicle drive device 100 further includes a case 2 that houses the rotary electric machine 1. The case 2 also houses the pair of output members 6 and the transmission mechanism 3. Note that in a modification, the case 2 may house only one (for example, a first output member 61) of the pair of output members 6. Moreover, the application of the vehicle drive device 100 is applicable to any vehicle including the rotary electric machine 1, such as an electric vehicle or a hybrid vehicle. Regarding a driving system, the application of the vehicle drive device 100 is also applicable to any vehicle such as a front-wheel drive vehicle or a rear-wheel drive vehicle.
Alternatively, a drive source may be only an engine (internal combustion engine).

The first output member 61, which is one of the pair of output members 6, is drivingly coupled to a first wheel W1, which is one of the pair of wheels W, and a second output member 62, which is the other one of the pair of output members 6, is drivingly coupled to a second wheel W2, which is the other one of the pair of wheels W. As shown in FIG. 1, the vehicle VC in which the vehicle drive device 100 is mounted includes a first drive shaft 63 that rotates together with the first wheel W1 and a second drive shaft 64 that rotates together with the second wheel W2. The first drive shaft 63 is coupled to the first wheel W1 via, for example, a constant-velocity joint, and the second drive shaft 64 is coupled to the second wheel W2 via, for example, a constant-velocity joint. Then, the first output member 61 is coupled to the first drive shaft 63 to rotate together with the first drive shaft 63, and the second output member 62 is coupled to the second drive shaft 64 to rotate together with the second drive shaft 64. Note that the first output member 61 may be in the form of an intermediate shaft. The first output member 61 is rotatably supported with respect to the case 2 via a bearing BR1 on the second side A2 in the axial direction, and is rotatably supported with respect to the case 2 via a bearing BR2 on the first side A1 in the axial direction. Note that in the present embodiment, as an example, each of the bearings BR1, BR2 is in the form of a ball bearing. However, each of the bearings BR1, BR2 may be in another form.

The vehicle drive device 100 causes output torque of the rotary electric machine 1 to be transmitted to the pair of wheels W via the pair of output members 6 to cause the vehicle VC in which the vehicle drive device 100 is mounted to travel. That is, the rotary electric machine 1 is a drive power source for the pair of wheels W. The pair of wheels W are a pair of left and right wheels (for example, a pair of left and right front wheels or a pair of left and right rear wheels) in the vehicle VC. The rotary electric machine 1 may be, for example, an alternating-current rotary electric machine driven with three-phase alternating current.

As shown in FIG. 2, the rotary electric machine 1 and the pair of output members 6 are disposed separately on two axes (specifically, a first axis C1 and a second axis C2) parallel to each other. Specifically, the rotary electric machine 1 is disposed on the first axis C1, and the pair of output members 6 are disposed on the second axis C2 different from the first axis C1. The first axis C1 and the second axis C2 are axes (imaginary axes) arranged parallel to each other. The transmission mechanism 3 includes an output gear (ring gear) 30 drivingly coupled to at least one of the pair of output members 6, coaxially with the pair of output members 6 (that is, on the second axis C2).

The rotary electric machine 1 is of an inner-rotor type, for example. In the rotary electric machine 1, a rotor 14 rotatable about the first axis C1 is disposed radially inward of a stator 11 (see FIG. 2). Note that as shown in FIG. 2, the stator 11 may be cooled by a water passage on a radially outer side, or may be cooled by air cooling.

A rotor shaft 15 of the rotor 14 is rotatably supported with respect to the case 2 via a bearing BR3 on the second side A2 in the axial direction, and is rotatably supported with respect to the case 2 via a bearing BR4 on the first side A1 in the axial direction. Note that in the present embodiment, as an example, each of the bearings BR3, BR4 is in the form of a ball bearing. However, each of the bearings BR3, BR4 may be in another form. Note that in the example shown in FIG. 2, the rotor shaft 15 has an axis oil passage 15a, and ejection holes 15b in the radial direction, and can cause oil in the axis oil passage 15a to be ejected toward coil ends 13 through the respective ejection holes 15b in the radial direction by centrifugal force during rotation.

The transmission mechanism 3 includes a reduction mechanism 34 in a power transmission path between the rotary electric machine 1 and the output gear 30. The reduction mechanism 34 is of any type, and may include a reduction mechanism using a counter gear, a reduction mechanism using a planetary gear, or the like. In the present embodiment, as an example, the reduction mechanism 34 includes a planetary gear mechanism, and the reduction mechanism 34 is disposed coaxially with the rotary electric machine 1. An output gear (carrier) 342 of the reduction mechanism 34 meshes with the output gear 30 of a differential gear mechanism 5 in the radial direction. Such a vehicle drive device 100 can have a compact configuration including two axes (the first axis C1 and the second axis C2). Note that in a modification, the vehicle drive device 100 may have three or more axes.

The reduction mechanism 34 may be disposed coaxially with the rotary electric machine 1 (that is, on the first axis C1), in a manner of being drivingly coupled to the rotary electric machine 1. In the present embodiment, as an example, the rotor 14 of the rotary electric machine 1 rotates together with an input member 16, along with a sun gear 341 of the reduction mechanism 34.

In addition, the transmission mechanism 3 further includes the differential gear mechanism 5. The differential gear mechanism 5 distributes drive power transmitted from the rotary electric machine 1 side to the pair of output members 6. In the example shown in FIG. 2, the differential gear mechanism 5 distributes rotation of the output gear 30 to a first side gear 51 and a second side gear 52. The differential gear mechanism 5 may be disposed coaxially with the pair of output members 6 (that is, on the second axis C2). Note that the differential gear mechanism 5 may be a bevel-gear-type differential gear mechanism, and the output gear 30 may be coupled to a differential case portion 50, included in the differential gear mechanism 5, to rotate together with the differential case portion 50.

Next, a configuration of the case 2 will be described in detail with reference to FIGS. 2 and 3.

FIG. 3 is a top view schematically showing the vehicle drive device 100. In FIG. 3, illustration of an inverter cover member 203 in an upper portion of an inverter case portion 24 is omitted such that elements disposed inside the inverter case portion 24 can be seen.

In the present embodiment, as an example, the case 2 includes a motor case portion 21, a transmission mechanism case portion 22, an output shaft case portion 23, and the inverter case portion 24 in an integrated form. Here, "integrated form" includes a form integrated by using a fastening member such as a bolt, or a form integrated by integral forming (for example, casting or casting using aluminizing or the like).

The motor case portion 21 forms a motor housing chamber S1 that houses the rotary electric machine 1, the transmission mechanism case portion 22 forms a transmission mechanism housing chamber S2 that houses the transmission mechanism 3, the output shaft case portion 23 forms an output shaft housing chamber S3 that houses the first output member 61, and the inverter case portion 24 forms an inverter housing chamber S4 that houses an inverter device 70. Note that the fact that the motor case portion 21 forms the motor housing chamber S1 means that a wall portion that bounds the motor housing chamber S1 forms the motor case portion 21. The similar applies to the transmission mechanism housing chamber S2, the output shaft case portion 23, and the inverter case portion 24.

The motor case portion 21 is in the form of a cylindrical shape corresponding to the outer shape of the rotary electric machine 1. However, in the motor case portion 21, the entirety of a cylindrical outer peripheral portion is not necessarily closed. For example, the motor housing chamber S1 and the output shaft housing chamber S3 may communicate with each other. In this case, a wall portion (partition wall portion) need not be formed on a side in the motor case portion 21 facing the output shaft housing chamber S3.

The transmission mechanism case portion 22 is provided on the second side A2 in the axial direction with respect to the motor case portion 21 and the output shaft case portion 23. The output shaft case portion 23 is provided on the X2 side in the X-direction with respect to the motor case portion 21. The inverter case portion 24 is provided on an upper side of the transmission mechanism case portion 22 and the output shaft case portion 23. Details of the inverter case portion 24 will be described later.

Note that in the present embodiment, as an example, the output shaft case portion 23 is provided, and thus the first output member 61 can be effectively protected from an external environment (for example, a flying stone or the like) as compared with a case in which the first output member 61 is provided outside the case 2. In addition, a clearance to be maintained between the first output member 61 and a peripheral component can be reduced. However, in a modification, the first output member 61 may be provided outside the case 2.

Note that the case 2 may be formed by joining a plurality of members (a case member and a cover member). Therefore, there is a case in which one case member that forms the case 2 forms two or more case portions among the motor case portion 21, the transmission mechanism case portion 22, the output shaft case portion 23, and the inverter case portion 24.

In addition, the motor housing chamber S1, the transmission mechanism housing chamber S2, the output shaft housing chamber S3, and the inverter housing chamber S4 formed by the case 2 may be completely separated from each other, may partially communicate with each other, or may be used in common in a manner having no boundary. For example, the motor housing chamber S1 and the output shaft housing chamber S3 may be used in common in a manner having no partition wall separating the motor housing chamber S1 and the output shaft housing chamber S3 from each other. In this case, the rotary electric machine 1 and the first output member 61 are housed in a shared housing chamber (specifically, the motor housing chamber S1 and the output shaft housing chamber S3) formed by the case 2. Note that in the present embodiment, as an example, oil is supplied to the motor housing chamber S1, and thus the motor housing chamber S1 and the inverter housing chamber S4 may be separated from each other.

In the following description, as an example, the case 2 is formed by joining a case member 200, a motor cover member 201, a differential cover member 202, and the inverter cover member 203. Note that the joining method may be fastening with bolts or the like.

The case member 200 may be formed as a one-piece member (for example, one member formed using a die-casting method and having a common material). In this case, the motor housing chamber S1 and the transmission mechanism housing chamber S2 may be separated by one partition wall 26.

The case member 200 is opened in the axial direction, on the first side A1 in the axial direction, and is opened in the axial direction, on the second side A2 in the axial direction.

The motor cover member 201 is provided to cover an opening on the first side A1 in the axial direction in the case member 200 (that is, an opening of the motor housing chamber S1 on the first side A1 in the axial direction). The motor cover member 201 may be formed as a one-piece member. The motor cover member 201 may be joined to an end surface (joining surface) of the case member 200 on the first side A1 in the axial direction. In this case, a joining surface (mating surface) 221 between the motor cover member 201 and the case member 200 may extend in a plane perpendicular to the axial direction.

The differential cover member 202 is provided to cover an opening on the second side A2 in the axial direction in the case member 200 (that is, an opening of the transmission mechanism housing chamber S2 on the second side A2 in the axial direction). The differential cover member 202 may be formed as a one-piece member. The differential cover member 202 may be joined to an end surface (joining surface) of the case member 200 on the second side A2 in the axial direction. In this case, a joining surface (mating surface) 222 between the differential cover member 202 and the case member 200 may extend in a plane perpendicular to the axial direction.

The inverter cover member 203 is provided to cover an opening of the inverter housing chamber S4 in the case member 200. The inverter cover member 203 may be formed as a one-piece member.

The inverter device 70 may be in the form of a module, and may be fixed to a wall portion forming the inverter case portion 24, with a bolt or the like.

As described above, the inverter device 70 is housed inside the inverter housing chamber S4 of the inverter case portion 24. The inverter device 70 receives electric power supplied from a battery BA (see FIG. 1), and supplies the electric power to the rotary electric machine 1. Note that the battery BA is of any type, and may be a high-voltage battery having a relatively high rated voltage, and may be a lithium-ion battery or the like. The inverter device 70 mainly includes a power module PM, a smoothing capacitor CM, and a bus bar structure 72. In addition, the inverter device 70 may further include a control board (not shown) or the like on which a control device for controlling an inverter circuit is mounted. The bus bar structure 72 is disposed between the rotary electric machine 1 and the power module PM, and electrically connects the rotary electric machine 1 and the power module PM.

In the present embodiment, as an example, the inverter case portion 24 is disposed in a manner to overlap the first axis C1 and the second axis C2 in a top view (a view as viewed in the second direction Y, the same applies hereinafter).

The inverter housing chamber S4 includes a first housing portion S41, a second housing portion S42, and a third housing portion S43. As shown in FIG. 3, the inverter housing chamber S4 is in the form of an L-shape in a top view. Specifically, when a center in the X-direction is set between the first axis C1 and the second axis C2 in the X-direction, the inverter housing chamber S4 extends on both sides in the X-direction with respect to the center in the X-direction in a manner to straddle the center in the X-direction. In addition, when a center in the A-direction is set between the rotary electric machine 1 and the reduction mechanism 34 in the A-direction, the inverter housing chamber S4 extends on both sides in the A-direction with respect to the center in the A-direction in a manner to straddle the center in the A-direction, on the first-direction second side X2. On the other hand, the inverter housing chamber S4 extends only on the second side A2 in the axial direction with respect to the center in the A-direction, on the first-direction first side X1.

More specifically, the first housing portion S41, the second housing portion S42, and the third housing portion S43 are arranged in an L-shape as a whole in the top view, as shown in FIG. 3. At this time, the first housing portion S41 overlaps the first axis C1 (that is, the reduction mechanism 34) on the second side A2 in the axial direction, in the top view, and overlaps the rotary electric machine 1 as viewed in the axial direction A. In addition, the second housing portion S42 overlaps the second axis C2 in the top view, and overlaps the rotary electric machine 1 as viewed in the first direction X. The third housing portion S43 is adjacent to the first housing portion S41 and the second housing portion S42, and overlaps the second axis C2 in the top view. Note that the third housing portion S43 may integrally communicate with the first housing portion S41 and the second housing portion S42.

The first housing portion S41, the second housing portion S42, and the third housing portion S43 are disposed on an upper side relative to a plane (not shown) including the first axis C1 that is the axis of a rotation shaft of the rotary electric machine 1 and the second axis C2 that is the axis of the output member 6. Note that in the present embodiment, as an example, as described above, since an offset amount in the second direction Y between the central axis of the output gear 30 (that is, the second axis C2) and the central axis of the rotary electric machine 1 (that is, the first axis C1) is set to be relatively small, the plane (not shown) including the first axis C1 and the second axis C2 is a plane close to a horizontal plane. However, in a modification, the first axis C1 and the second axis C2 may be significantly offset in the upper-lower direction.

Note that, among the components of the inverter device 70, the bus bar structure 72 may be disposed in the first housing portion S41, the smoothing capacitor CM may be disposed in the second housing portion S42, and the power module PM may be disposed in the third housing portion S43. At this time, the bus bar structure 72 and the power module PM are adjacent to each other in the first direction X, and the power module PM and the smoothing capacitor CM are adjacent to each other in the axial direction A. Note that boundaries of the first housing portion S41, the second housing portion S42, and the third housing portion S43 need not be strict, and for example, a portion of the power module PM on the first side A1 in the axial direction may be disposed in the second housing portion S42, or a portion of the power module PM on the first-direction first side X1 may be disposed in the first housing portion S41.

Note that, here, although the specific disposition or arrangement manner in the inverter housing chamber S4 has been described with reference to FIG. 3, any manner is adopted as the disposition or arrangement manner of the power module PM and the like, and the disposition or arrangement manner of the power module PM and the like is not limited to the disposition or arrangement manner shown in FIG. 3. Further, in a modification, the inverter case portion 24 itself may be omitted.

Next, characteristic configurations of the present embodiment will be described with reference to FIG. 4 and subsequent drawings.

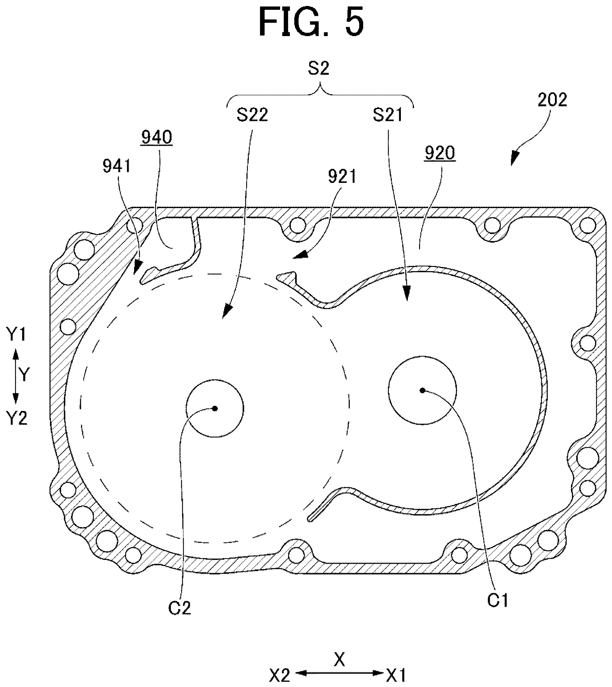

FIG. 4 is a side view schematically showing the vehicle drive device 100 according to the present embodiment, as viewed from the second side A2 in the axial direction. FIG. 4 shows a state in which the differential cover member 202 is removed. FIG. 5 is a side view schematically showing the differential cover member 202 as viewed from the A1 side.

Note that, as described above, the transmission mechanism housing chamber S2 and the output shaft housing chamber S3 have a relationship in which they overlap the second axis C2 in the top view, and are adjacent to each other in the axial direction. In addition, the transmission mechanism housing chamber S2 extends in the X-direction in a manner of housing the reduction mechanism 34 and the differential gear mechanism 5, and thus the transmission mechanism housing chamber S2 and the output shaft housing chamber S3 extend in an L-shape in the top view. Hereinafter, a portion of the transmission mechanism housing chamber S2 that houses the reduction mechanism 34 is also referred to as a "reduction mechanism housing chamber S21", and a portion of the transmission mechanism housing chamber S2 that houses the differential gear mechanism 5 is also referred to as a "differential gear housing chamber S22".

In the present embodiment, oil is circulated inside the vehicle drive device 100 not by a so-called forced lubrication system using an oil pump (mechanical or electric oil pump) but by a lubrication system (natural lubrication system) in which the oil is scooped up by rotation of a gear and is used for lubrication. However, in a modification, an oil pump may be used in a combined manner, in part of lubrication and/or cooling.

Specifically, in the present embodiment, a lubrication system is adopted in which oil stored in a lower portion inside the transmission mechanism housing chamber S2 is scooped up by rotation of the output gear 30 (so-called differential ring) of the differential gear mechanism 5 to lubricate various objects to be lubricated.

In the present embodiment, as shown in FIGS. 4 and 5, a catch tank 920 is provided in the transmission mechanism housing chamber S2.

As shown in FIG. 4, the catch tank 920 extends radially outward of a wall portion 9201 extending in the axial direction around the reduction mechanism 34 in the reduction mechanism housing chamber S21. The catch tank 920 has an inlet 921 at a position at which oil scooped up by rotation of the output gear 30 can be caught. The catch tank 920 has an outlet 922 opened to the differential gear housing chamber S22 at a lower portion. In this case, an end portion of a return flow passage 292 on the second side A2 in the axial direction (an opening of the return flow passage 292 on the reduction mechanism housing chamber S21 side) may be provided in the vicinity of the outlet 922. Thus, the oil used for cooling the coil end 13 in a space S11, described above, can be relatively quickly returned to a lower portion inside the differential gear housing chamber S22 (an oil reservoir in which the output gear 30 is immersed) via the lower portion of the catch tank 920. Note that the catch tank 920 may also be caused to communicate with the axis oil passage 15a of the rotor shaft 15 or the like to supply oil to the axis oil passage 15a of the rotor shaft 15.

Note that in the return flow passage 292, an end portion on the first side A1 in the axial direction may communicate with the space S11 of the motor housing chamber S1, and the end portion on the second side A2 in the axial direction may communicate with the lower portion of the transmission mechanism housing chamber S2 (the lower portion of the catch tank 920).

The oil scooped up by the rotation of the output gear 30 of the differential gear mechanism 5 is introduced into the axis oil passage 15a of the rotor shaft 15 via the catch tank 920. Specifically, the catch tank 920 is provided with a communication port 75 in an upper portion thereof. The communication port 75 is an opening, on a radially outer side, of a communication passage 74 extending in a radial direction, and an end portion, on a radially inner side, of the communication passage 74 is connected to an axis oil passage 16a of the input member 16. In this case, the oil scooped up by the rotation of the output gear 30 of the differential gear mechanism 5 is introduced into the communication passage 74 from the communication port 75 of the catch tank 920, and then is supplied to the axis oil passage 15a of the rotor shaft 15 via the axis oil passage 16a. The oil supplied to the axis oil passage 15a is used for lubrication or the like of the reduction mechanism 34 or the like. Note that any method is adopted as a method of supplying oil from the catch tank 920 to the axis oil passage 15a, and another route may be used.

In this manner, according to the present embodiment, in the vehicle drive device 100, by adopting such a natural lubrication system, it is possible to reduce the cost and the physical size due to absence of an oil pump.

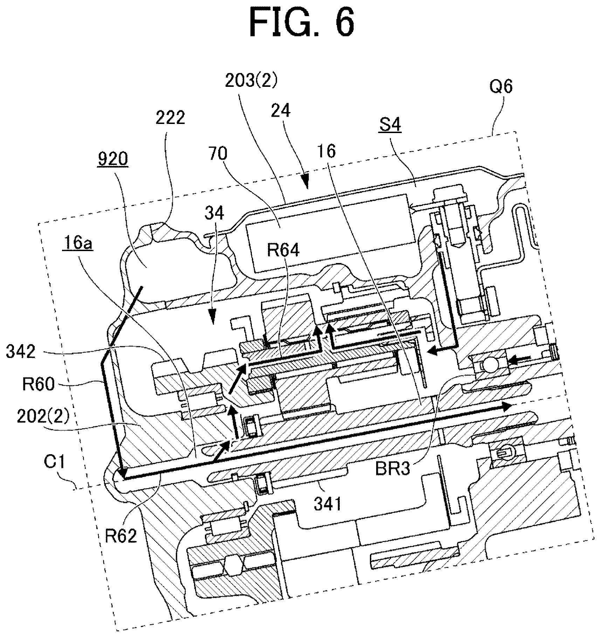

FIG. 6 is a view schematically showing a state in which, in accordance with a tilt in a left-right direction of the vehicle VC, a tilt in the left-right direction occurs in the case 2 (and the axis oil passages 16a, 15a accordingly), and is an enlarged view of Q6 in FIG. 2. In FIG. 6, in the flow of oil from the catch tank 920, a flow of oil passing through the communication passage 74 is schematically represented as arrow R60, a flow of oil passing through the axis oil passage 16a is schematically represented as arrow R62, and a flow of oil to be used for lubrication or the like of the reduction mechanism 34 or the like is schematically represented as arrow R64.

Incidentally, as mentioned in the section "TECHNICAL PROBLEMS", when the case 2 of the vehicle drive device 100 is tilted in accordance with the attitude of the vehicle drive device 100, an oil passage such as the axis oil passage 16a is also tilted accordingly. In this regard, in the configuration in which an oil pump is absent and the catch tank 920 is provided as in the present embodiment, there may be a case in which it is difficult for oil inside the catch tank 920 to flow through an oil passage (for example, the axis oil passage 16a) in the left-right direction tilted with respect to a horizontal plane (a case in which the flow rate significantly decreases or becomes zero), in accordance with the attitude of the vehicle VC. This is because since the oil inside the catch tank 920 is supplied to the axis oil passage 16a on the basis of its own weight or head pressure (hydraulic head pressure), the head pressure of the oil inside the axis oil passage 16a can be higher than the head pressure of the oil inside the catch tank 920 due to the tilt.

Therefore, in the present embodiment, as will be described in detail below, the problem described above is solved by providing an oil supply system that can pressure-feed oil in a manner similar to that of an oil pump, though the oil pump is not used.

Specifically, in the present embodiment, as shown in FIGS. 4 and 5, a pressure-feed oil chamber 940 is provided in the transmission mechanism housing chamber S2. Unlike the catch tank 920, the pressure-feed oil chamber 940 has a relatively small volume. Note that, similarly to the catch tank 920, the pressure-feed oil chamber 940 may be closed by the differential cover member 202 on the second side A2 in the axial direction.

In the present embodiment, the pressure-feed oil chamber 940 may be disposed to have an inlet 941 slightly radially outward of an outer peripheral edge of the output gear 30, as shown in FIGS. 4 and 5. The pressure-feed oil chamber 940 is provided partially with respect to the entire circumferential range around the output gear 30. In this instance, the pressure-feed oil chamber 940 preferably extends over a circumferential-direction range within 1/3 of the entire circumferential range around the output gear 30, and more preferably extends over a circumferential-direction range within 1/4 of the entire circumferential range around the output gear 30. In this case, the pressure-feed oil chamber 940 having a relatively small volume can be formed using a dead space, and an oil pressure required for pressure-feeding to be described later can be efficiently increased.

The pressure-feed oil chamber 940 is preferably disposed to have the inlet 941 slightly radially outward of the outer peripheral edge of the output gear 30. In this case, the oil scooped up by the output gear 30 can be directly introduced into the inlet 941 of the pressure-feed oil chamber 940, and the oil pressure required for pressure-feeding to be described later can be efficiently increased.

A pressure-feed oil passage 950 communicates with the pressure-feed oil chamber 940. Details of the pressure-feed oil passage 950 will be described later. In the present embodiment, the oil inside the pressure-feed oil chamber 940 is pressure-fed to the pressure-feed oil passage 950 on the basis of an oil pressure generated when new oil is directly introduced into the pressure-feed oil chamber 940. Note that an opening area of the pressure-feed oil passage 950 on the pressure-feed oil chamber 940 side is significantly smaller than the area of the extending range of the pressure-feed oil chamber 940 as viewed in the axial direction.

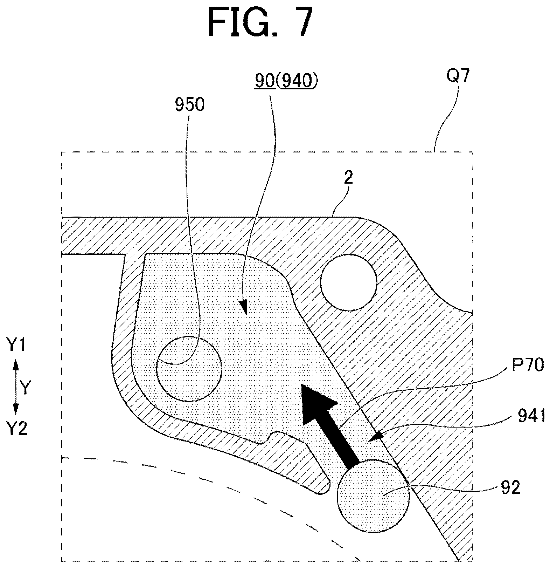

FIG. 7 is a schematic explanatory view of a principle of generating an oil pressure for oil in the pressure-feed oil chamber 940, and is an enlarged view of Q7 in FIG. 4. In FIG. 7, of oil scooped up from the output gear 30, oil to be introduced into the pressure-feed oil chamber 940 is schematically represented as a hatched region of reference sign 92, and oil inside the pressure-feed oil chamber 940 is schematically represented as a hatched region of reference sign 90.

In the present embodiment, the oil scooped up from the output gear 30 is introduced into the pressure-feed oil chamber 940 as described above, and an inflow amount thereof increases as the rotation speed of the output gear 30 increases. Then, since the pressure-feed oil chamber 940 has a relatively small volume as described above, when the rotation speed of the output gear 30 exceeds a specific rotation speed significantly larger than zero (an example of a second rotation speed), the inside of the pressure-feed oil chamber 940 is filled with the oil 90 as schematically shown in FIG. 7. That is, the inside of the pressure-feed oil chamber 940 is filled with the oil 90 in a manner substantially not containing air. Note that the specific rotation speed can vary depending on situations or individual types, but is adaptive to have a desired value by design of the volume of the pressure-feed oil chamber 940 or the like. When the state reaches such a filled state, the oil to be introduced into the pressure-feed oil chamber 940 of the oil scooped up from the output gear 30 can apply an oil pressure (see a pressure P70 in FIG. 7) to the oil inside the pressure-feed oil chamber 940. That is, the pressure of the oil inside the pressure-feed oil chamber 940 is increased on the basis of the oil pressure generated when the new oil is directly introduced into the pressure-feed oil chamber 940. As a result, the oil inside the pressure-feed oil chamber 940 is pressure-fed to the pressure-feed oil passage 950. Here, the manner in which "oil is directly introduced" into one oil passage means a manner in which the oil is introduced into the one oil passage without via another oil passage.

Thus, according to the present embodiment, oil inside the pressure-feed oil chamber 940 can be pressure-fed to the pressure-feed oil passage 950 on the basis of the oil pressure generated when new oil is directly introduced into the pressure-feed oil chamber 940, without using an oil pump. As a result, even when the tilt of the vehicle as described above (for example, the tilt in the left-right direction) occurs, it is possible to maintain supply (flow) of oil via the pressure-feed oil passage 950.

Note that in the present embodiment, as shown in FIG. 4 and the like, since the inlet 941 of the pressure-feed oil chamber 940 faces obliquely downward, substantially all of the oil in the pressure-feed oil chamber 940 returns to the lower portion of the transmission mechanism housing chamber S2 by its own weight, when the rotation speed of the output gear 30 is a rotation speed of zero or close thereto (an example of a first rotation speed).

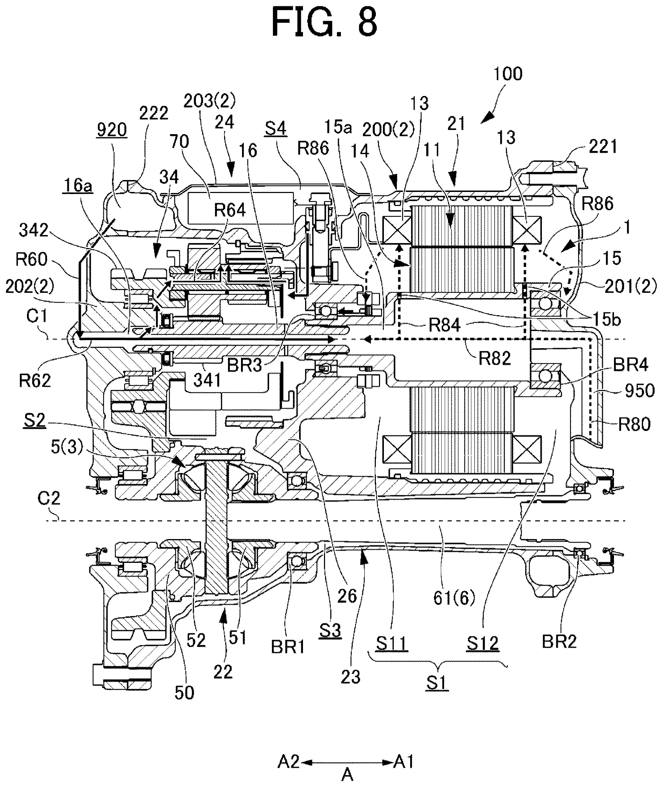

Next, a preferred example of the pressure-feed oil passage 950 will be described with reference to FIG. 8 and subsequent drawings.

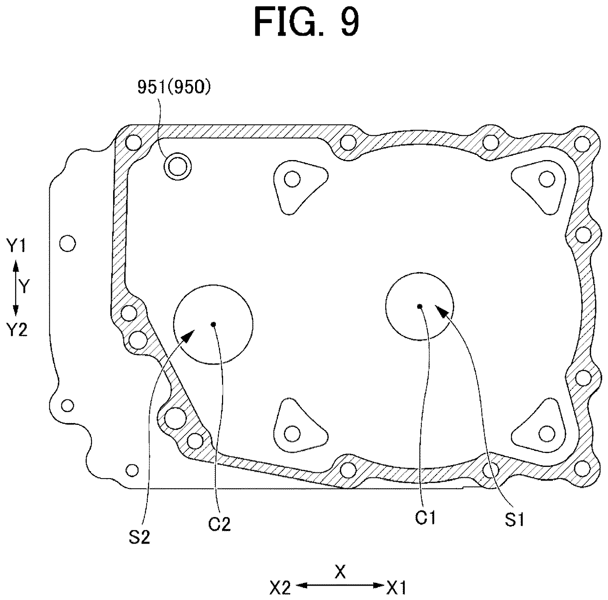

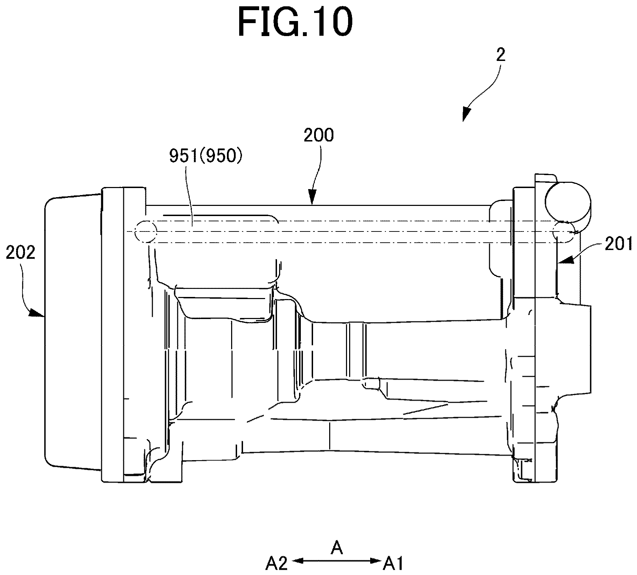

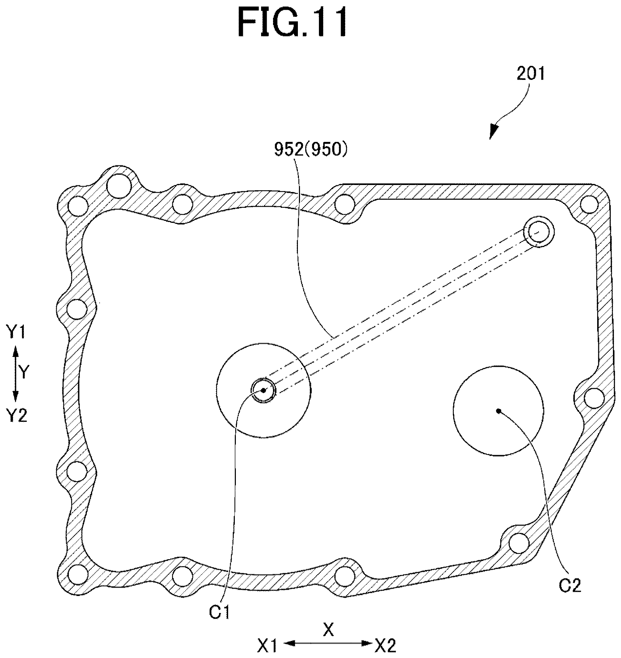

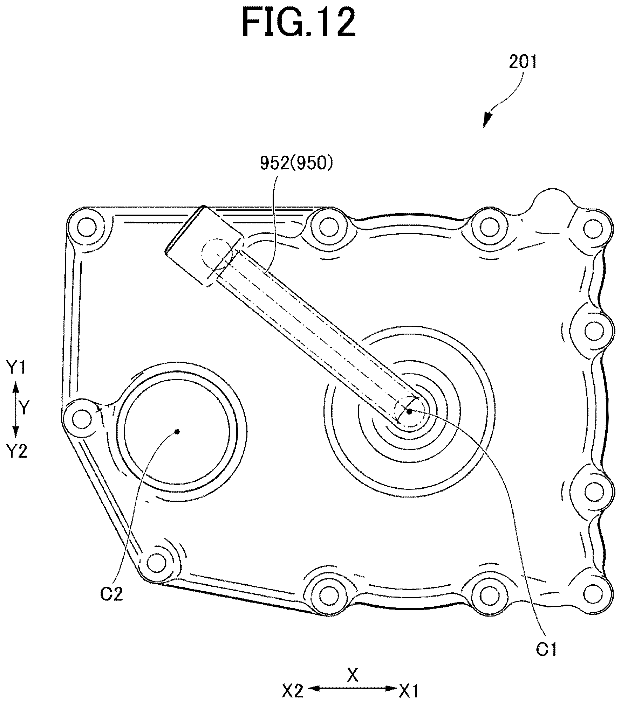

FIG. 8 is an explanatory view of flows of oil via the pressure-feed oil passage 950, and is a view in which corresponding flows of the oil are schematically represented on FIG. 2 by using respective arrows. Note that FIG. 8 also shows the flows of the oil from the catch tank 920 outlined with reference to FIG. 6. FIGS. 9 to 12 are explanatory views of the pressure-feed oil passage 950, and FIG. 9 is a side view schematically showing the vehicle drive device 100 as viewed from the A1 side. FIG. 9 shows a state in which the motor cover member 201 is removed. FIG. 10 is a side view schematically showing the vehicle drive device 100 as viewed from a side perpendicular to the axial direction A. FIG. 11 is a side view schematically showing the motor cover member 201 as viewed from the second side A2 in the axial direction. FIG. 12 is a side view schematically showing the motor cover member 201 as viewed from the first side A1 in the axial direction.

In the present embodiment, the pressure-feed oil passage 950 communicates with the axis oil passage 15a of the rotor shaft 15 from the first side A1 in the axial direction. Note that, as described above, the communication passage 74 from the catch tank 920 communicates with the axis oil passage 15a of the rotor shaft 15 from the second side A2 in the axial direction, via the axis oil passage 16a of the input member 16. As a result, oil can flow into the axis oil passage 15a of the rotor shaft 15 from both sides in the axial direction A, and stabilization of oil supply to the axis oil passage 15a of the rotor shaft 15 can be effectively enhanced.

Specifically, the pressure-feed oil passage 950 mainly includes an axial oil passage 951 and a radial oil passage 952 in this order from the pressure-feed oil chamber 940.

The axial oil passage 951 is formed in the case member 200, and extends in the axial direction. The axial oil passage 951 includes an end portion, on the second side A2 in the axial direction, connected to the pressure-feed oil chamber 940, and an end portion, on the first side A1 in the axial direction, connected to the radial oil passage 952. Note that in the example shown in FIG. 10, the axial oil passage 951 linearly extends substantially parallel to the axial direction A, but may have a bent portion. Further, a portion or entirety of the axial oil passage 951 may be formed of a tubular member that can be disposed inside the motor housing chamber S1.

As shown in FIGS. 11 and 12, the radial oil passage 952 is formed in the motor cover member 201, and extends in the radial direction. The radial oil passage 952 includes an end portion, on a radially outer side, connected to the axial oil passage 951, and an end portion, on a radially inner side, connected to the axis oil passage 15a. Note that in the example shown in FIGS. 11 and 12, the radial oil passage 952 linearly extends substantially parallel to the radial direction, but may have a bent portion. Further, a portion or entirety of the radial oil passage 952 may be formed of a tubular member that can be disposed inside the motor housing chamber S1. Note that the radial oil passage 952 may be formed to pass through an oil cooler (not shown) that may be provided in the motor cover member 201.

In this manner, according to the present embodiment, the oil scooped up by the output gear 30 can be stably supplied to the axis oil passage 15a via the two supply systems, without using an oil pump.

Specifically, as shown in FIG. 8, as described above, the oil scooped up by the rotation of the output gear 30 of the differential gear mechanism 5 is introduced from the second side A2 in the axial direction into the axis oil passage 15a of the rotor shaft 15 via the catch tank 920, the communication passage 74, and the axis oil passage 16a of the input member 16 (see arrow R60 and arrow R62). Further, the oil scooped up by the rotation of the output gear 30 of the differential gear mechanism 5 is introduced from the first side A1 in the axial direction into the axis oil passage 15a of the rotor shaft 15 via the pressure-feed oil chamber 940 and the pressure-feed oil passage 950 (see arrow R80). The oil supplied to the axis oil passage 15a passes through the axis oil passage 15a (see arrow R82), and is ejected through the ejection holes 15b to the coil ends 13 of the rotary electric machine 1 (see arrows R84). As a result, the coil ends 13 can be efficiently cooled by the oil scooped up by the rotation of the output gear 30 of the differential gear mechanism 5. Then, the oil ejected to the coil end 13 inside a space S12 of the motor housing chamber S1 lubricates the bearings BR3, BR4, and the like (see arrows R86), and is returned from the space S12 to the transmission mechanism housing chamber S2, via an end portion (an end portion on the A2 side in the axial direction) (see FIG. 4) of a return flow passage 290 at a position on a lower side relative to the second axis C2. Further, the oil ejected to the coil end 13 inside the space S11 of the motor housing chamber S1 is returned from the space S11 to the transmission mechanism housing chamber S2, via the end portion (the end portion on the A2 side in the axial direction) (see FIG. 4) of the return flow passage 292 at a position on a lower side relative to the second axis C2. The oil thus returned to the transmission mechanism housing chamber S2 is returned to the differential gear housing chamber S22, through the outlet 922, on a lower side relative to the second axis C2, in the catch tank 920. As a result, it is possible to scoop up the oil again by the rotation of the output gear 30 of the differential gear mechanism 5.

Note that although the two return flow passages 290, 292 are provided in the present embodiment, the number of return flow passages is freely set, and the return flow passages are freely configured.

Although each embodiment has been described in detail above, the present disclosure is not limited to a specific embodiment, and various modifications and changes can be made within the scope of the claims. Further, all or some of the constituent elements of the embodiment described above can be combined.

For example, in the embodiment described above, the pressure-feed oil chamber 940 functions on the basis of the oil scooped up by the output gear 30 of the differential gear mechanism 5. However, the configuration is not limited thereto. That is, a configuration may be made in which the gear that scoops up the oil is a gear other than the output gear 30 of the differential gear mechanism 5. Also in this case, the pressure-feed oil chamber 940 may be disposed with respect to the gear (the gear that scoops up the oil), in a similar manner with respect to the output gear 30.

Further, in the embodiment described above, the elements that scoop up the oil to the pressure-feed oil chamber 940 are teeth of an outer peripheral portion of the output gear 30. However, the elements that scoop up the oil to the pressure-feed oil chamber 940 are not limited thereto. That is, the elements that scoop up the oil to the pressure-feed oil chamber 940 are not necessarily gear teeth, and may be another element. For example, fins may be provided on an outer peripheral portion of a rotary body that rotates together with a portion (for example, a carrier) of the reduction mechanism 34, and the oil may be scooped up by the fins. In this case, an oil chamber like the pressure-feed oil chamber 940 may be disposed to receive the oil scooped up by the fins.

Further, in the embodiment described above, a power source of the vehicle is the rotary electric machine 1. However, the power source of the vehicle is not limited thereto. For example, the power source of the vehicle may include an engine (internal combustion engine) instead of or in addition to the rotary electric machine 1.

Further, in the embodiment described above, the supply destination of the oil discharged from the pressure-feed oil chamber 940 includes the axis oil passage 15a extending in the left-right direction of the vehicle. However, the supply destination is not limited thereto. For example, any supply destination is adopted as the supply destination of the oil discharged from the pressure-feed oil chamber 940, and the supply destination may be an oil passage extending in a direction other than the left-right direction of the vehicle. In addition, the supply destination of the oil discharged from the pressure-feed oil chamber 940 is preferably an oil passage extending in a substantially horizontal plane. However, the supply destination is not limited also thereto.

### REFERENCE SIGNS LIST

100: Vehicle drive device, 1: Rotary electric machine (power source), 2: Case, 3: Transmission mechanism, 15: Rotor shaft, 15a: Axis oil passage, 30: Output gear (rotary body, gear), 920: Catch tank (second oil chamber), 74: Communication passage (second oil passage), 940: Pressure-feed oil chamber (first oil chamber), 950: Pressure-feed oil passage (first oil passage), and S2: Transmission mechanism housing chamber (housing chamber)

## Claims

1. A vehicle drive device comprising:
a case that forms a housing chamber inside which oil flows;
a power transmission mechanism disposed inside the housing chamber, the power transmission mechanism being able to transmit power from a power source, to a wheel; and
an oil passage structure at least a portion of which is formed in the case,
wherein
the power transmission mechanism includes a rotary body that rotates about an axis when power transmission is performed,
the rotary body includes an outer peripheral portion able to scoop up oil stored on a lower side inside the housing chamber by rotation of the rotary body,
the oil passage structure includes a first oil chamber into which oil scooped up by rotation of the rotary body is introduced, and a first oil passage communicating with the first oil chamber, and
oil inside the first oil chamber is pressure-fed to the first oil passage, based on an oil pressure generated when new oil is introduced into the first oil chamber by rotation of the rotary body.

2. The vehicle drive device according to claim 1, wherein the rotary body includes a gear having teeth on an outer peripheral portion.

3. The vehicle drive device according to claim 1, wherein oil inside the first oil chamber is pressure-fed to the first oil passage, based on an oil pressure generated when oil is introduced into the first oil chamber, when a rotation speed of the rotary body exceeds a specific rotation speed.

4. The vehicle drive device according to claim 1, wherein in a state where a rotation speed of the rotary body is a first rotation speed of zero or more, oil inside the first oil chamber returns to a lower portion of the housing chamber by weight of oil, and in a state where the rotation speed of the rotary body is a second rotation speed that is higher than the first rotation speed, oil inside the first oil chamber is pressure-fed to the first oil passage, based on an oil pressure generated when oil is introduced into the first oil chamber.

5. The vehicle drive device according to claim 1, wherein the first oil chamber extends over a circumferential-direction range within 1/4 of an entire circumferential range around the rotary body.

6. The vehicle drive device according to claim 1, wherein
the power source includes a rotary electric machine disposed inside the housing chamber, and
the first oil passage communicates with an axis oil passage of a rotor shaft of the rotary electric machine.

7. The vehicle drive device according to any one of claims 1 to 6, wherein
the oil passage structure further includes a second oil chamber into which oil scooped up by the rotary body through rotation of the rotary body is introduced, and a second oil passage communicating with the second oil chamber, and
oil inside the second oil chamber is supplied to the second oil passage, based on weight of oil or a head pressure inside the second oil chamber.

8. The vehicle drive device according to claim 7, wherein the first oil chamber has a volume smaller than a volume of the second oil chamber.

9. The vehicle drive device according to claim 7, wherein
the power source includes a rotary electric machine disposed inside the housing chamber,
the first oil passage communicates with an axis oil passage of a rotor of the rotary electric machine from one side in an axial direction, and
the second oil passage communicates with the axis oil passage of the rotor of the rotary electric machine from another side in the axial direction.
